# EUROPÄISCHE PATENTSCHRIFT

(11) **EP 0 763 067 B1**
(45) Veröffentlichungstag und Bekanntmachung des Hinweises auf die Patenterteilung: **22.04.1998**
(21) Anmeldenummer: 95921763.9
(22) Anmeldetag: 26.05.1995
(51) Int. Cl.: C08G 18/12, C08G 18/66, C09J 175/04

(54) **SCHNELL ABBINDENDER POLYURETHAN-SCHMELZKLEBSTOFF**
QUICK-SETTING POLYURETHANE FUSION ADHESIVE
COLLES POLYURETHANE A FUSION A PRISE RAPIDE

(30) Priorität: 03.06.1994 DE 4419449
(43) Veröffentlichungstag der Anmeldung: 19.03.1997
(73) Patentinhaber: Henkel Kommanditgesellschaft auf Aktien, 40191 Düsseldorf (DE)
(72) Erfinder: KREBS, Michael, D-40724 Hilden (DE)
(86) Internationale Anmeldenummer: EP9502017
(87) Internationale Veröffentlichungsnummer: WO9533783

(56) Entgegenhaltungen:
- WO-A-92/16575
- DE-A- 4 023 801
- DE-A- 4 129 936
- DE-C- 1 930 340
- "Polyurethane", Kunststoff-Handbuch, Bd. 7,1993, S. 57-59,66-70

## Beschreibung

Die Erfindung betrifft einen schnell abbindenden, feuchtigkeitshärtenden Polyurethan-Schmelzklebstoff, seine Herstellung und seine Verwendung.

Feuchtigkeitshärtende bzw. feuchtigkeitsvernetzende Polyurethan-Schmelzklebstoffe sind Klebstoffe, die bei Raumtemperatur fest sind und in Form ihrer Schmelze appliziert werden, und deren polymere Bestandteile Urethan-Gruppen sowie reaktionsfähige Isocyanat-Gruppen enthalten. Durch das Abkühlen dieser Schmelze erfolgt zunächst eine rasche physikalische Abbindung des Klebstoffes, gefolgt von einer chemischen Reaktion der noch vorhandenen Isocyanatgruppen mit Feuchtigkeit zu einem vernetzten unschmelzbaren Klebstoff. Erst nach dieser chemischen Aushärtung mit Feuchtigkeit unter Molekülvergrößerung bzw. Vernetzung erhält der Klebstoff seine endgültigen Eigenschaften. Polyurethan-Schmelzklebstoffe im engeren Sinne sind lösungsmittelfreie Klebstoffe.

Die Hauptvorteile von Schmelzklebstoffen gegenüber anderen Klebstoff-Systemen sind das sehr schnelle Abbinden und das Fehlen von Wasser und Lösungsmitteln.

Derartige feuchtigkeitshärtende Polyurethan-Schmelzklebstoffe für die Verklebung der verschiedensten Substrate sind bekannt:

In der DE-A-3236313 wird ein Schmelzklebstoff beschrieben, der ein prepolymeres Isocyanat, ein thermoplastisches Polymer und ein niedrigmolekulares Kunstharz enthält. Das prepolymere Isocyanat ist ein reaktives Polyurethan-Prepolymer aus einem aromatischen Diisocyanat und/oder einem Prepolymeren dieses Diisocyanats mit einem kurzkettigen Diol sowie aus einen Polyether oder einem Polyester mit OH-Gruppen und einem kurzkettigen Diol.

Dieser Schmelzklebstoff eignet sich zum Verkleben von thermoplastischen und duroplastischen Kunststoffen, Schaumstoffen, lackierten Oberflächen, Gummi, Textilien, Non-Woven-Materialien, Leder, Holz, Metall und Papier. Für Formulierungen, die hohe Anfangsfestigkeiten haben sollen und auf porösen Materialien angewandt werden sollen, müssen 5 bis 40 Gew.% des thermoplastischen Polyurethans zugesetzt werden. Hierdurch erhöht sich jedoch die Schmelzviskosität, so daß diese Klebstoffe nur bei sehr hohen Temperaturen im Sprüh-oder Spritzverfahren aufgetragen werden können.

In der GB-A-2234516 wird ein feuchtigkeitshärtender Schmelzklebstoff beschrieben, der aus einem Polyurethan-Prepolymer A mit harten und weichen Kettensegmenten und endständigen Isocyanatgruppen und einem Urethan-Prepolymer B mit weichen Kettensegmenten und endständigen Isocyanatgruppen besteht. Das Prepolymer A wird stufenweise aus einem thermoplastischen gesättigten Polyesterpolyol mit einem Molekulargewicht zwischen 1000 und 6000 und eine Schmelzpunkt von 50°C oder höher, einem Polyol mit eine Molekulargewicht von nicht mehr als 8000 und einem Diisocyanat hergestellt, das Prepolymer B wird aus einem Polyol mit einem Molekulargewicht von nicht mehr als 8000 und einem Diisocyanat hergestellt. Letzteres Polyol kann bei Raumtemperatur flüssig sein oder einen Schmelzpunkt von unter 50°C haben. Als besonders bevorzugtes Diisocyanat wird das 4,4'-Diphenylmethandiisocyanat oder das Toluylendiisocyanat beschrieben. Diese Schmelzklebstoffe erfordern jedoch ein aufwendiges Herstellungsverfahren: Entweder wird in einem 3-stufigen Prozess das Prepolymer A und das Prepolymer B hergestellt oder die Prepoylmeren müssen in separaten 2- bzw. 1-stufigen Verfahren hergestellt werden und anschließend gemischt werden. Die Schmelzviskosität dieser Klebstoffe bei 120°C ist sehr hoch (> als 1 Mio mPas), damit sind diese Klebstoffe nicht nur aufwendig herzustellen, sie sind auch für Sprühauftrag ungeeignet.

Die EP-A-340906 beschreibt einen schnell abbindenden Polyurethan-Schmelzklebstoff bestehend aus einer Mischung von mindestens 2 amorphen Polyurethan-Prepolymeren, wobei die beiden Prepolymeren unterschiedliche Glasübergangstemperaturen haben. Vorzugsweise hat das erste Polyurethan-Prepolymer eine Glasübergangstemperatur oberhalb Raumtemperatur und das zweite Polyurethan-Prepolymer eine Glasübergangstemperatur unterhalb Raumtemperatur. Das Polyurethan-Prepolymer mit der höheren Glasübergangstemperatur besteht vorzugsweise aus einem Polyesterdiol und einem Polyisocyanat, das Polyurethan-Prepolymer mit der niederen Glasübergangstemperatur besteht vorzugsweise aus einem linearen oder leicht verzweigten Polyester oder einem Polyether. Als bevorzugte Diisocyanate sind aromatisch. Diisocyanate wie das 4,4'-Diphenylmethandiisocyanat oder das 2,4-Toluylendiisocyanat angegeben. Die Viskositäten dieser Schmelzklebstoffe bei 130°C liegen bei mindestens 30000 bis 90000 mPas.

Gemäß EP-B-354527 können Schmelzklebstoffe aus Umsetzungsprodukten von Polyisocyanaten und Hydroxypolyestern hergestellt werden, wobei die Hydroxypolyester mehr als 50 Gew.% eines Hydroxypolyesters A enthält. Dieser Hydroxypolyester A ist aus aliphatischen Diolen, ggf. Etherdiolen und aliphatischen Dicarbonsäuren mit 8, 10 oder 12 Methylengruppen aufgebaut. Gegebenenfalls kann ein Teil der aliphatischen Dicarbonsäuren durch aromatische Dicarbonsäuren ersetzt werden, vorzugsweise sollen jedoch mindestens 50 Mol% der Dicarbonsäuren aus Dodecandisäure bestehen. Die sehr rasche Abbindegeschwindigkeit dieser Schmelzklebstoffe wird auf das schnelle Rekristallisieren in der Klebefuge nach dem Aufbringen aus der Schmelze zurückgeführt. Als bevorzugte Anwendungsfelder werden die Schuhindustrie, die holzverarbeitende Industrie, die Papierindustrie und die Metallverarbeitung genannt.

Die EP-A-369607 beschreibt schnell abbindende, feuchtigkeitshärtende Polyurethan-Schmelzklebatoffe auf der Basis von Polyurethanen, die mindestens ein Polyether-basierendes Prepolymer mit einer Glasübergangstemperatur oberhalb der Raumtemperatur sowie ein zweites Polyurethan-Prepolymer mit einer Glasübergangstemperatur unterhalb der Raumtemperatur enthalten. Das zweite Polyurethan-Prepolymer kann auf der Basis eines amorphen Polyesters, eines linearen oder leicht verzweigten Polyethers oder eines Polybutadiens sein. Für das Polyurethan-Prepolymer mit der hohen Glasübergangstemperatur werden Polyole mit einem Molekulargewicht von vorzugsweise 250 bis 800, besonders bevorzugt etwa 400, vorgeschlagen. Hieraus resultieren verhältnismäßig hohe Isocyanatgehalte des fertigt Schmelzklebstoffes, daß diese nur in dünnen Schichten appliziert werden können, um das Schäumen durch das abgespaltene Kohlendioxid zu vermeiden.
Gemäß EP-A-248658 können Polyurethan-Schmelzklebstoffe aus einem Reaktionsprodukt aus Diisocyanaten und kristallinen Polyesterdiolen hergestellt werden, wobei die Polyesterdiole aus symmetrischen aromatischen Dicarbonsäuren hergestellt wurden und einen Säurerest von mindestens 50 Mol% haben. In bevorzugten Ausführungsformen werden die freien Isocyanatgruppen blockiert, zum Beispiel durch Acetylaceton. Obwohl diese Maßnahme die Feuchtigkeitsempfindlichkeit des Schmelzklebstoffs vermindert, und damit die Lagerstabilität erhöht, wird die Abbindegeschwindigkeit signifikant verlängert, da die Isocyanatgruppe in einem Deblockierungsschritt erst wieder bei der hohen Applikationstemperatur in ihre reaktive Form überführt werden muß.

Die EP-A-472278 beschreibt eine Klebstoffzusammensetzung bestehend aus einem Polyalkylenetherdiol, einem Polyalkylenethertriol, einem Polyesterpolyol und einer aliphatischen Isocyanatverbindung. Die Isocyanatverbindung ist dabei vorzugsweise ein nicht-aromatisches, cyclisches oder lineares aliphatisches organisches Polyisocyanat mit einer Funktionalität von 2 bis 4, vorzugsweise von 2 bis 3. Die Polyalkylenetherdiole sind insbesondere Polytetramethylenether-diol, Polyethylenglykol, Polypropylenglykol oder Polybutylenetherdiol, wobei die Polytetramethylenglykole bevorzugt werden. Für die Polyalkylenethertriole werden die Polypropylenethertriole bevorzugt. Als Polyesterpolyol werden Lacton-basierende Polyesterpolyole bevorzugt, wie z.B. Polycaprolacton, besonders bevorzugt ein Polycaprolactontriol aus der Reaktion von Caprolacton mit Trimethylolpropan. Die Wirksamkeit dieses Schmelzklebstoff 5 wird auf die relativ hohe Kristallinität des Polyesterpolyol-basierenden Urethansegments zurückgeführt. Die Klebstoffzusammensetzung eignet sich für die Verwendung auf Geweben, Non-woven-Materialien, Holz, Metall, Leder und Kunststoff. Über die Schmelzviskositäten der Klebstoffe werden keine Angaben gemacht.

Die US-A-4352858 beschreibt eine modifizierte Polyurethan-Klebstoff-Zusammenastzung bestehend aus einem Isocyanat-terminierten Prepolymer mit einem Molekulargewicht von mindestens 1000 und 2,5 bis 100 Gew.%, bezogen auf obiges Prepolymer von einem Dicarbamat-Ester-Reaktionsprodukt aus 2 Mol eines organischen Diisocyanats und einem Mol einer niedermolekularen Dihydroxyverbindung, wie z.B. Ethylenglykol, Diethylenglykol, Propylenglykol, 1,4-Butandiol usw. Der Dicarbamatester muß dem Polyurethanprepolymer nachträglich zugesetzt werden, er kann nicht während der Polymerisation des Prepolymers hinzugefügt werden. Dieses bedeutet einen zusätzlichen Arbeitschritt, der die Herstellung des Produktes aufwendiger gestaltet. Als typische Anwendungen werden Laminierungen von Folien, Verpackungen sowie die Laminierung von Isoliermaterialien und die Herstellung von Polsterungen für die Automobilindustrie genannt.

In der EP-A-511566 wird ein Polyurethan-Schmelzklebstoff aus einem bei Raumtemperatur flüssigen oder hochviskosen mehrfunktionellen Polyether- und/oder Polyesterpolyol und einer bei Raumtemperatur kristallinen, mehrfunktionellen Polyolkomponente mit einem Molekulargewicht von 500 bis 10000 und einem Gemisch von Polyisocyanaten beschrieben. Dabei enthält dieses Gemisch der Polyisocyanatkomponente ein Isocyanat mit zwei unterschiedlich reaktiven Isocyanatgruppen und ein Diisocyanat mit einer Isocyanatreaktivität gegenüber Hydroxylgruppen, die größer ist als die der weniger reaktiven Isocyanatgruppe der Polyisocyanatkomponente mit den zwei unterschiedlich reaktiven Isocyanatgruppen. Vorzugsweise ist die Polyisocyanatkomponente mit den unterschiedlich reaktiven Isocyanatgruppen das 2,4-Toluylendiisocyanat oder unsymmetrisch substituierte Derivate des Diphenylmethandiisocyanats oder Isophorondiisocyanat. Für die zweite Diisocyanatverbindung werden bevorzugt das 4,4'-Diphenylmethandiisocyanat oder das Hexamethylendiisocyanat genannt. Als bei Raumtemperatur kristalline Polyolkomponente werden OH-funktionelle Polyesterpolyole genannt, bevorzugt Kondensationsprodukte aus Adipinsäure mit 1,4-Butandiol oder 1,6-Hexandiol. Als Polyolkomponente, die bei Raumtemperatur flüssig oder hochviskos ist, werden Mischungen aus OH-funktionellen Polyether-Polyolen genannt, z.B. Polypropylenglykole und/oder Polyethylenglykole. Die hochviskosen Schmelzklebstoffe eignen sich insbesondere zum Verkleben von Fenster- bzw. Scheinwerferstreuscheiben, also Glas-Kunststoff-Verbunden für die Automobilindustrie. Weitere Angaben über bevorzugte Anwendungen werden nicht gemacht.

Die bekannten feuchtigkeitshärtenden Polyurethan-Schmelzklebstoffe weisen noch gravierende Nachteile auf, die einer wirtschaftlichen Anwendung bei einer Reihe von Verklebungen bisher entgegenstanden. Die verbesserungswürdigen Eigenschaften sind u.a.:
- Der Klebstoff soll möglichst bei niedrigen Schmelztemperaturen appliziert werden können, wodurch die Verklebung thermisch sensibler Substrate (Polyolefinschäume) ermöglicht wird.
- Bei den Applikationstemperaturen sollte der Klebstoff eine möglichst niedrige Viskosität haben, um auch eine Sprüh-Applikation zu ermöglichen.
- Die offene Zeit soll mit möglichst einfachen Mitteln auf Kundenwünsche eingestellt werden können.
- Es sollen möglichst preiswerte Standardpolyetherpolyole bzw. Polyesterpolyole eingesetzt werden können.
- Das Herstellungsverfahren soll möglichst einfach sein, d.h. die Zahl der notwendigen Komponenten soll möglichst niedrig sein.
- Das Produkt soll auf möglichst vielen unterschiedlichen Substraten haften.
- Die Klebeverbindung soll beim Gebrauch ausreichend fest und trotzdem flexibel sein, wobei zusätzlich ausreichende Kriechfestigkeit gewährleistet sein muß.
- Die Viskosität des aufgeschmolzenen Klebstoffes soll während der Herstellung, Abfüllung und Applikation hinreichend stabil sein.

Die erfindungsgemäße Aufgabe besteht also darin, einen feuchtigkeitshärtenden, schnell abbindenden Polyurethan-Schmelzklebstoff bereitzustellen, der mit Maschinen auftragbar ist, vorzugsweise wegen seiner geringen Viskosität bei niedrigen Temperaturen im Sprühverfahren aufgetragen werden kann, dessen Schmelzviskosität hinreichend konstant ist, und der sich für die Verklebung von thermisch sensiblen Substraten eignet.

Die erfindungsgemäße Lösung ist den Patentansprüchen zu entnahmen. Sie besteht in eine feuchtigkeitshärtenden Polyurethan-Schmelzklebstoff mit reaktiven Isocyanat-Endgruppen, hergestellt aus
a) mindestens einem bei Raumtemperatur flüssigen Polyetherpolyol mit einem Zahlenmittel der Molmassen im Bereich von 500 bis 10000 und/oder einem bei Raumtemperatur flüssigen Polyesterpolyol mit einem Zahlenmittel der Molmassen im Bereich von 500 bis 5000,
b) mindestens einem aromatischen Polyol mit einer Molmasse unter 1000,
c) mindestens einem Diisocyanat,
d) gegebenenfalls Katalysatoren, klebrigmachenden Harzen, Stabilisatoren, Farbpasten und weiteren üblichen Hilfsstoffen,
wobei das stöchiometrische Verhältnis von Isocyanatgruppen zur Summe der Hydroxylgruppen zwischen 1.03 und 3.5 liegt.

Unter einem "Polyurethan-Prepolymer" wird ein Oliogurethan mit reaktiven Isocyanat-Gruppen verstanden, das durch die Umsetzung von Hydroxy-funktionellen Verbindungen mit einem stöchiometrischen Überschuß von Polyisocyanaten entsteht. Unter Polyisocyanaten werden hier vorzugsweise niedermolekulare Verbindungen mit 2 Isocyanatgruppen verstanden, sie können jedoch bis zu ca. 10 Gew.% an trifunktionellem Isocyanat enthalten. Mit steigendem Gehalt an trifunktionellem Isocyanat ist allerdings mit ungewollten Vernetzungen sowohl bei der Herstellung als auch bei der Verwendung des Schmelzklebstoffs zu rechnen. Neben den aliphatischen und cycloaliphatischen Polyisocyanaten kommen insbesondere die aromatischen Polyisocyanate in Frage.

Beispiele für geeignete aromatische Polyisocyanate sind: Alle Isomeren des Toluylendiiaocyanats (TDI) entweder in isomerenreiner Form oder als Mischung mehrerer Isomerer, Naphthylen-1,5-Diisocyanat, Diphenylmethan-4,4'-Diisocyanat (MDI), Diphenylmethan-2,4'-Diisocyanat sowie insbesondere auch Mischungen des 4,4'-Diphenylmethandiisocyanats mit dem 2,4'-Isomeren, wobei das 2,4'-Isomere einen Anteil von mindestens 10%, vorzugsweise jedoch mindestens 40% in der isomeren Mischung haben soll. Beispiele für geeignete cycloaliphatische Polyisocyanate sind die Hydrierungsprodukte der vorgenannten aromatischen Diisocyanate, 1-Isocyanatomethyl-3-Iaocyanato-1,5,5-Trimethyl-cyclohexan (Isophoron-Diisocyanat, IPDI), cyclohexan-1,4-Diisocyanat, hydriertes Xylylen-Diisocyanat (A₆XDI), Tetramethylxylendiisocyanat (TMXDI) und Dimerfettsäure-Diisocyanat. Beispiele für aliphatische Polyisocyanate sind Hexan-1,6--Diisocyanat (HDI), 1,6-Diisocyanato-2,2,4-Trismethylhexan, 1,6-Diiaocyanato-2,4,4-Trimethylhexan, Butan-1,4-Diisocyanat sowie 1,12-Dodecandiisocyanat (C₁₂DI).

Unter einem "aromatischen Polyol" wird ein Alkoxylierungsprodukt einer aromatischen Polyhydroxy-Verbindung mit einer Molmasse unter 1000 verstanden. Insbesondere sind dies die Umetzungsprodukte von Ethylenoxid bzw. Propylenoxid mit aromatischen Dihydroxyverbindungen wie z.B. Hydrochinon, Resorcin, Brenzkatechin, Bis(hydroxy-diphenyl), Bisphenol A, Bisphenol F, Isomere des Dihydroxynaphthalins (Isomerenrein oder Mischung mehrerer Isomerer), Isomere des Dihydroxyanthracens (reines Isomer oder Isomerenmischung) oder Isomere des Dihydroxyanthrachinons. Vorzugsweise sind pro aromatischer Hydroxygruppe 1 bis 7 Alkoxy-Einheiten addiert worden.

Unter einem "Polyetherpolyol" wird ein linearer Polyether mit 2 OH-Gruppen verstanden. Die bevorzugten Polyetherpolyole haben die allgemeine Formel HO(-R-O)ₘ-H, wobei R ein Kohlenwasserstoffrest mit 2 bis 4 C-Atonen ist. Konkrete Beispiele für derartige Polyetherpolyole sind: Polyethylenglykol, Polytetramethylenglykol (PolyTHF) und vor allem Polypropylenglykol (R = -CH₂CH(CH₃)-). Dabei können die Polyetherpolyole sowohl als Homopolymere als auch Copolymere, sowohl als Blockcopolymere als auch statistische Copolymere eingesetzt werden. Vorzugsweise wird nur eine Art von Polyetherpolyol eingesetzt, es können jedoch auch Mischungen verwendet werden aus 2 bis 3 Polyetherpolyolen, die sich in ihrem mittleren Molekulargewicht und/oder in der Art ihrer Bausteine unterscheiden. Ggf. können auch untergeordnete Mengen eines trifunktionellen Polyetherpolyols in der Mischung vorhanden sein. Das mittlere Molekulargewicht (Zahlenmittel der Molmasse) der Polyetherpolyole liegt im Bereich von 500 bis 10000, vorzugsweise im Bereich von 1000 bis 5000. Die erfindungsgemäß geeigneten "Polyesterpolyole" sind bei Raumtemperatur flüssig, das heißt, ihre Viskosität bei 25°C liegt unter 60000mPas, gemessen mit einem Brookfield-Viskosimeter, wobei die Glasübergangstemperatur des Polyesterpolyols unter 20°C ist. Die Glasübergangstemperatur wird vorzugsweise nach der Differential Scanning Calorimetry (DSC) oder der Dynamic Mechanical Thermoanalysis (DMTA) gemessen. Beispiele für derartige Polyesterpolyole sind Umsetzungsprodukte von Dicarbonsäuren, wie Glutarsäure, Adipinsäure, Sebazinsäure, Korksäure, 3,3-Dimethyl-Glutarsäure, Dimerfettsäure mit niedermolekularen difunktionellen Alkoholen wie z.B. Ethylenglykol, Propylenglykol, 1,4-Butandiol, Diethylenglykol, Triethylenglykol oder Dimerfettalkohol. Ggf. können die geeigneten Polyesterpolyole auch leicht verzweigt sein, d.h. zu ihrer Herstellung wurden untergeordnete Mengen einer Tricarbonsäure bzw. eines trifunktionellen Alkohols verwendet.

In einer besonders bevorzugten Ausführungsform der Erfindung wird die Reaktivität des aromatischen Polyols auf die Reaktivität des Polyetherols bzw. Polyesterols gegenüber dem Polyisocyanat abgestimmt, so daß die Reaktivität der Hydroxylgruppen des Polyetherpolyols bzw. des Polyesterpolyols gegenüber den reaktiven Isocyanatgruppen in gleicher Größenordnung liegen wie die der Hydroxylgruppen des aromatischen Polyols. Hierdurch wird erreicht, daß die Gruppierungen des aromatischen Polyols im wesentlichen statistisch entlang der Kette des Polyurethanprepolymers verteilt sind. Diese Maßnahme hat zur Folge, daß es in dem Schmelzklebstoff zu keiner makroskopischen Domänenbildung bzw. zu Unverträglichkeiten kommt, der Schmelzklebstoff ist daher völlig transparent und eignet sich z.B. für Versiegelungen oder Montageverklebungen mit "unsichtbarer" Fuge.

Der erfindungsgemäße Schmelzklebstoff kann ggf. zusätzlich Katalysatoren enthalten, die die Bildung des Polyurethanprepolymeren bei seiner Herstellung beschleunigen und/oder die Feuchtigkeitovernetzung nach der Applikation des Schmelzklebatoffs beschleunigen. Als Katalysatoren eignen sich die normalen Polyurethan-Katalysatoren wie z.B. Verbindungen des 2- bzw 4-wertigen Zinns, insbesondere die Dicarboxylate des 2-wertigen Zinns bzw. die Dialkylzinn-Dicarboxylate bzw. -Dialkoxylate. Beispielhaft seien genannt Dibutylzinndilaurat, Dibutylzinndiacetat, Dioctylzinndiacetat, Dibutylzinnmaleat, Zinn(II)-Octoat, Zinn(II)-Phenolat oder auch die Acetylacetonate des 2-bzw. 4-wertigen Zinns. Weiterhin können die hochwirksamen tertiären Amine oder Amidine als Katalysatoren verwendet werden, ggf. in Kombination mit den oben genannten Zinnverbindungen. Als Amine kommen dabei sowohl acyclische als auch insbesondere cyclische Verbindungen in Frage. Beispiele sind das Tetramethylbutandiamin, Bis(Dimethylaminoethyl)ether, 1,4-Diaza-bicycloocmn (DABCO), 1,8-Diaza-bicyclo-(5.4.0)-Undecen, 2,2'-Dimorpholinodiethylether oder Dimethylpiperazin oder auch Mischungen der vorgenannten Amine.

Als "Stabilisatoren" im Sinne dieser Erfindung sind einerseits Stabilisatoren zu verstehen, die eine ViskositätsStabilität des Polyurethanprepolymeren während der Herstellung, Lagerung bzw. Applikation bewirken. Hierfür sind z.B. monofunktionelle carbonsäurechloride, monofunktionelle hochreaktive Isocyanate, aber auch nichtkorrosive anorganische Säuren geeignet, beispielhaft seien genannt Benzoylchlorid, Toluolsulfonylisocyanat, Phosphorsäure oder phosphorige Säure. Des weiteren sind als Stabilisatoren im Sinne dieser Erfindung Antioxidantien, UV-Stabilisatoren oder Hydrolyse-Stabilisatoren zu verstehen. Die Auswahl dieser Stabilisatoren richtet sich zum einen nach den Hauptkomponenten des Schmelzklebstoffs und zum anderen nach den Applikationsbedingungen sowie den zu erwartenden Belastungen der Verklebung. Wenn das Polyurethanprepolymer überwiegend aus Polyetherbeusteinen aufgebaut ist, sind hauptsächlich Antioxidatien, ggf. in Kombination mit UV-Schutzmitteln, notwendig. Beispiele hierfür sind die handelsüblichen sterisch gehinderten Phenole und/oder Thioether und/oder substituierten Benzotriazole. Bestehen wesentliche Bestandteile des Polyurethanprepolymers aus Polyesterbausteinen, werden vorzugsweise Hydrolyse-Stabilisatoren, z.B. vom Carbodiimid-Typ, eingesetzt.

Gegebenenfalls können die erfindungsgemäßen Schmelzklebstoffe noch klebrigmachende Harze, wie z.B. Abietinsäure, Abietinsäure-Ester, Terpenharze, Terpenphenolharze oder Kohlenwasserstoffharze sowie Füllstoffe (z.B. Silikate, Talk, Kalziumkarbonate, Tone oder Ruß), Weichmacher, wie z.B. Phthalate oder Thixotropiermittel (z.B. Bentone, pyrogene Kieselsäuren, Harnstoffderivate, fibrilierte oder Pulp-Rurzfasern) oder Farbpasten bzw. Pigmente enthalten.

In einer besonders bevorzugten Ausführungsform wird in einer zweistufigen Reaktion zunächst in der ersten Stufe ein hydroxyfunktionelles Prepolymer mit Urethangruppen aus dem aromatischen Polyol und dem Polyetherpolyol bzw. Polyesterpolyol mit einem reaktionsträgen Isocyanat, wie z.B. dem TMXDI, IPDI oder H₆XDI, in der Weise hergestellt, daß die Gesamtzahl der Hydroxylgruppen in bezug auf die zunächst eingesetzten Isocyanat-Gruppen im stöchiometrischen Überschuß vorhanden sind. Diese Reaktion wird so lange fortgeführt, bis sämtliche Isocyanatgruppen abreagiert sind. Die verbliebenen Hydroxylgruppen werden dann mit einem aromatischen Diisocyanat umgesetzt, wobei Diisocyanat-Gruppen im stöchiometrischen Überschuß vorliegen, so daß ein Isocyanat-Endgruppen-haltiges Polyurethanprepolymer entsteht. Vorzugsweise wird hierzu ein aromatisches Diisocyanat verwendet, das entweder mindestens eine sterisch gehinderte Isocyanatgruppe enthält oder zwei Isocyanatgruppen mit unterschiedlicher Reaktivität enthält. Beispiele hierfür sind das TDI oder, besonders bevorzugt, das 2,4'-Diphenylmethandiisocyanat. Letzteres kann entweder als Isomeren-reine Verbindung eingesetzt werden oder im Gemisch mit dem 4,4'-Isomeren. Dabei sollte der Anteil an 2,4'-Isomeren im Isomerengemisch mindestens 10%, vorzugsweise jedoch mindestens 40 Gew%, betragen. Die besonderen Vorteile dieser Ausführungsform sind:
- Einfache Herstellung unter standard-Rührbedingungen in normalen Reaktoren, ohne daß es zur Gel- oder Stippenbildung insbesondere in der 2. Stufe kommt,
- das Produkt hat eine hohe Klebrigkeit und eine hohe Kohäsion,
- das Produkt ist sehr niederviakos (Größenordnung ca. 3000 mPas bis ca. 8000 mPas bei 150°C),
- aufgrund seiner niedrigen Schmelzviskosität kann der Schmelzklebstoff bei sehr niedrigen Temperaturen appliziert werden, dadurch ist eine Verklebung thermisch sensibler Substrate (wie z.B. Polyolefinschäume) möglich, die niedrige Viskosität des polyurethanprepolymers erlaubt es, die Konzentration des eingesetzten aromatischen Polyisocyanats in der 2. Stufe abzusenken, wodurch der monomere Isocyanatgehalt im Endprodukt signifikant reduziert ist.

Die letztgenannte Eigenschaft ist für eine erhöhte Arbeitssicherheit bei der Verarbeitung der Schmelzklebstoffe von entscheidendem Vorteil.

Trotz der Abwesenheit von größeren kristallinen Domänen im erfindungsgemäßen Schmelzklebstoff hat dieser überraschenderweise eine sehr hohe Abbindegeschwindigkeit. Wegen des Fehlens der kristallinen Domänen kann der Schmelzklebstoff in einem breiten Eigenschaftsspektrum variiert werden:
- Kurze bis längere offene Zeit,
- weich- bis zähelastisch,
- transparent bis perlmuttartig weiß.
Bekanntlich beruht die hohe Abbindegeschwindigkeit der Schmelzklebstoffe des Standes der Technik entweder auf einem raschen Kristallisieren der kristallinen Domänen des Klebstoffes oder, im Falle amorpher Schmelzklebstoffe, auf dem glasartigen Erstarren der Schmelze. Diese Kristallisation hat zwei entscheidende Nachteile:
Erstens sind derartige Klebstoffe häufig spröde, insbesondere bei tiefen Temperaturen, so daß sie sich nicht für die Verklebung von flexiblen Substraten eignen. Zweitens bewirkt die bei der Kristallisation freiwerdende Kristallisationswärme bei der Verklebung von thermisch schlecht leitenden Substraten (z.B. Schäume) eine verzögerte Kristallisation, und damit eine deutliche Verzögerung des Abbindevorganges. Daher sind die stark kristallisierenden Schmelzklebstoffe für das Verkleben dieser Substrate ungeeignet.

Auch die bisher alternativ zur Verfügung stehenden Schmelzklebstoffe auf der Basis von amorphen Polyestern waren für die Verklebung derartiger Substrate ungeeignet, da diese aufgrund der hohen Schmelzviskosität nur bei sehr hohen Temperaturen appliziert werden konnten.

Nachfolgend wird die Erfindung anhand einiger bevorzugter Ausführungsbeispiele näher erläutert.

Die Mengenangaben in den Beispielen sind Gewichtsteile, wenn nicht anders angegeben.

### Beispiel 1:

In einem heizbaren Rührkessel mit Vakuumanschluß werden 38.0 Teile eines Polypropylengylkols (Diol), OH-Zahl 56 vorgelegt und darin 30.0 Teile eines propoxylierten Bisphenol A, OH-Zahl 322 gelöst. Dann wird unter Vakuum 30 Minuten bei 130°C entwässert, bis der Wassergehalt unter 250 ppm liegt. Danach wird der Kessel mit Stickstoff begast und 0.001 Teile Dibutylzinndilaurat sowie 0.05 Teile Toluol-Sulfonylisocyanat zugegeben und ohne Vakuum 15 Minuten gerührt. Anschließend werden 20.607 Teile m-TMXDI zugegeben und Vakuum angelegt. Die Temperatur wird langsam auf 150°C gesteigert und die Reaktion fortgeführt bis die Isocyanat-Titration 0% ergibt. Der Reaktor wird mit Stickstoff begast, danach werden 12.556 Teile MDI (4,4'-/2,4'-Isomerengemisch im Verhältnis etwa 1:1) zugegeben und im Vakuum 30 Minuten unter Rühren reagieren lassen. Danach werden 0.2 Teile Irganox 1010 (Antioxidans der Fa. Ciba-Geigy) hinzugefügt und unter Rühren gelöst Anschließend wird das Reaktionsprodukt bei mindestens 140°C bis 150°C im feuchtigkeitsdichten Behälter abgefüllt und diese Behälter sofort verschlossen.

Das Produkt hatte eine Viskosität von 2800mPas bei 150°C (Brookfield-Viskosimeter). Die glasklare Schmelze erstarrte nach kurzer Zeit und blieb auch nach dem Erstarren klar. Die offene Zeit, das heißt, die Zeit, die zwischen dem Filmauftrag der Schmelze und dem Zusammenfügen der zu verklebenden Teile maximal vergehen darf, betrug je nach Schichtstärke ca. 5 bis 10 Sekunden, bei einem 50µm-starken Film und 150°C Auftragstemperatur betrug die offene Zeit ca. 10 Sekunden. Wegen dieser kurzen Abbindezeit ist das Produkt für die Presskaschierung, z.B. von Automobil-Teilen gut geeignet. Der Schmelzklebstoff ließ sich sowohl im Sprühauftrag sehr gut verarbeiten als auch als Raupenauftrag. In der Tabelle 1 sind die Haftungseigenschaften auf den diversen Substraten, die z.B. im Automobilbau verwendet werden, aufgeführt.

**Tabelle 1**

| Substrat | Haftung (qualitativ) |
|---|---|
| Holzfaserformstoff mit Bindemittel Phenolharz | gut |
| Holzfaserformstoff mit Bindemittel Epoxidharz | gut |
| Naturfaserformstoff mit Bindemittel UP-Harz | gut |
| ABS | gut |
| PVC-Folie | sehr gut |
| Baumwollvliesstoff mit Bindemittel Phenolharz | sehr gut |
| Molto (Verbundmaterial aus Textil und Schaum) | sehr gut |

Der Zugscherfestigkeitsaufbau über die Zeit wurde an Holzprüfkörpern (25x10x0,2mm) bei Normalklima-Lagerung gemessen, Applikationstemperatur 150°C (s. Tabelle 2):

**Tabelle 2**

| Zeit [min] | Zugscherfestigkeit [MPa] |
|---|---|
| 1 | 1.6 |
| 1.5 | 2.8 |
| 1.8 | 3.5 |
| 2.0 | 4.1 |
| 3.4 | 4.6 |
| 6.1 | 4.85 |
| 8.0 | 4.23 |
| 9.5 | 3.8 |
| 11.5 | 4.0 |
| 18.5 | 4.64 |
| 31.5 | 5.32 |

Endfestigkeit (nach 24 h): 6.5 MPa, Substrat-Bruch.

### Beispiel 2:

Analog zu Beispiel 1 wurde ein Schmelzklebstoff aus den folgenden Bestandteilen hergestellt:

| | |
|---|---|
| Propoxyliertes Bisphenol A (OH-Zahl 322) | 32.875 Teile |
| Polypropylenglykol (OH-Zahl 56) | 32.875 Teile |
| Irganox 1010 | 0.193 Teile |
| Toluolsulfonylisocyanat | 0.049 Teile |
| Dibutylzinndilaurat | 0.001 Teile |
| MDI (Mischung aus 4,4'- und 2,4'-Isomeren, Verhältnis 1:1) | 12.522 Teile |
| m-TMXDI | 21.485 Teile |

Viskosität bei 150°C: 8200mPas, offene Zeit bei 130°C: <5 sek., bei 170°C: ca. 5 sek. Mit diesem Schmelzklebstoff wurden Verklebungsversuche zwischen einem Polyurethanschwamm und einem Scheuervlies vorgenommen, wie sie bei der Herstellung von Haushaltsichwämmen verwendet werden. Auftragamenge: Ca. 40 g/m² mit Sprühauftrag.
Temperatur des Schmelzklebstoffs: 150°C.
Wärmeaktivierung durch IR-Strahler.
Verpressung des Weichschaums mit dem Vlies mit einem Anpressdruck von ca. 3kPa. Die Ergebnisse sind in Tabelle 3 zusammengefaßt.

**Tabelle 3**

| Aktivierzeit | Temp.direkt nach Verkl. | Preßzeit | Temp.vor Zerreißen | Ergebnis |
|---|---|---|---|---|
| 10 s | 87°C | 25 s | 81°C | zieht Fäden |
| 7 s | 73°C | 25 s | 68°C | beginnender Ausriß |
| 5 s | 65°C | 25 s | 60°C | Schaumausriß |
| 5 s | 65°C | 15 s | 60°C | Schaumausriß |

Aus diesen praxisnahen Versuchen wird deutlich, daß der Schmelzklebstoff selbst bei sehr kurzer Aktivierzeit und sehr kurzer Anpreßzeit auch für die Verklebung von thermisch empfindlichen und die Wärme sehr schlecht leitenden Schaummaterialien sehr gut geeignet ist.

### Vergleichbeispiel (nicht erfindungsgemäß):

In Analogie zu EP-A-369607 wurde ein Prepolymer B und ein Prepolymer A3 gefertigt.

### Prepolymer B

406.3 g MDI wurden bei 40°C in einem geschlossenen Reaktor aufgeschmolzen. 4.3 g Toluolfsulfonylisocyanat und 500 g Polypropylenoxid (Molekulargewicht 400) wurden hinzugefügt. Nach 30 Minuten bei 130°C war die Reaktion beendet.

### Prepolymer A3

800 g eines amorphen Polyesters aus 1,6-Hexandiol und einer Mischung Adipinsäure und Isophthalsäure mit einem Molekulargewicht von 3500, 4.6 g p-Toluolsulfonylisocyanat werden in einem auf 80°C aufgeheizten Reaktor gegeben, anschließend werden 127 g MDI unter Rühren hinzugefügt und die Temperatur wird 30 Minuten bei 80°C gehalten und anschließend 45 Minuten bei 127°C gehalten.

Zur Herstellung des fertigen Schmelzklebstoffes werden 855 g Prepolymer B bei 130°C in einen Reaktor gegeben und unter Rühren 92.7 g Prepolymer A3 hinzugefügt, 1.5 Stunden bei 130°C gerührt. Zum Abfüllen mußte die Temperatur auf 170°C erhöht werden, da das Reaktionsprodukt zu hochviskos war, um bei 130°C abgefüllt werden zu können. In Abweichung zur EP-A-369607 war für das Prepolymer B ein höherer Isocyanat-Anteil gewählt worden (NCO:OH-Verhältnis 1.3:1 anstelle von 1.181:1), um die Viskosität dieses Prepolymers in einen handhabbaren Bereich zu bringen.

Die Viskosität dieses Schmelzklebstoffs war viel zu hoch, um diesen Schmelzklebstoff im Sprühauftrag einsetzen zu können. Die Zugscherfestigkeit bei der Verklebung von Holz dieses Vergleichsklebstoffs ist gemäß EP-A-369607 1.5 MPa, gemessen 10 min nach Applikation.

Die Beispiele zeigen deutlich, daß die erfindungsgemäßen Schmelzklebstoffe sich insbesondere durch eine sehr niedrige Schnelzviskosität bei verhältnismäßig niedrigen Auftragstemperaturen auszeichnen und wegen des Fehlens der Rekristallisation gut für die Verklebung von thermisch schlecht leitfähigen Substraten, wie z.B. Schäumen, geeignet sind, auf einer Vielzahl von Substraten gute bis sehr gute Haftung zeigen, sowie eine rasche Anfangascherfestigkeit haben.

## Patentansprüche

1. Feuchtigkeitshärtender Schmelzklebstoff auf der Basis von Polyurethanprepolymeren mit reaktiven Isocyanat-Endgruppen hergestellt aus
a) mindestens einem bei Raumtemperatur flüssigen Polyetherpolyol mit einem Zahlenmittel der Molmassen im Bereich von 500 bis 10000 und/oder einem bei Raumtemperatur flüssigen Polyesterpolyol mit einem Zahlenmittel der Molmassen im Bereich von 500 bis 5000, das heißt, ihre Viskosität bei 25°C liegt unter 60000mPas, gemessen mit einem Brookfield-Viskosimeter, wobei die Glasübergangstemperatur des Polyesterpolyols unter 20°C ist,
b) mindestens einem aromatischen Polyol, das heißt, Alkoxylierungsprodukte von aromatischen Dihydroxy-Verbindungen mit einer Molmasse unter 1000,
c) mindestens einem Diisocyanat,
d) gegebenenfalls Katalysatoren, klebrigmachenden Harzen, Stabilisatoren, Farbpasten und weiteren üblichen Hilfsstoffen,
wobei das stöichiometrische Verhältnis von Isocyanatgruppen zur Summe der Hydroxylgruppen zwischen 1.03 und 3.5 liegt.

2. Schmelzklebstoff nach Anspruch 1, **dadurch gekennzeichnet**, daß als Polyetherpolyol Polypropylenglycole, gegebenenfalls unter Zusatz von Polypropylentriolen, verwendet wird.

3. Schmelzklebstoff nach Anspruch **2, dadurch gekennzeichnet**, daß das oder die Polyetherpolyole Copolymere aus Propylenoxid und Ethylenoxid sind, vorzugsweise mit endständigen Ethylenoxideinheiten.

4. Schmelzklebstoff nach Anspruch 1, **dadurch gekennzeichnet**, daß das oder die Raumtemperatur flüssige(n) Polyesterpolyol(e) im wesentlichen difunktionell ist/sind und eine Glasübergangstemperatur von unter 20°C hat/haben.

5. Schmelzklebstoff nach mindestens einem der Ansprüche 1 bis 4, **dadurch gekennzeichnet**, daß als aromatische Dihydroxyverbindung mindestens eine Verbindung aus der Gruppe Hydrochinon, Resorcin, Brenzcatechin oder Bis(hydroxydiphenyl) oder Bisphenol A, Bisphenol F oder der isomeren Dihydroxynaphthaline oder der isomeren Dihydroxyanthracene oder der isomeren Dihydroxyanthrachinone ausgewählt wird.

6. Schmelzklebstoff nach Anspruch 5, **dadurch gekennzeichnet**, daß es sich um propoxylierte aromatische Dihydroxyverbindungen handelt, und daß pro aromatische Hydroxygruppe 1 bis 7 Propylenoxid-Einheiten addiert wurden.

7. Schmelzklebstoff nach mindestens einem der vorhergehenden Ansprüche, **dadurch gekennzeichnet**, daß als Diisocyanat eine Verbindung mit mindestens einer sterisch gehinderten Isocyanatgruppe verwendet wird.

8. Schmelzklebstoff nach Anspruch 7, **dadurch gekennzeichnet**, daß mindestens ein Diisocyanat aus der Gruppe Tetramethylxylendiisocyanat (TMXDI), 1-isocyanatomethyl-3-isocyanato-1,5,5-trimethylcyclohexan (IPDI), eines oder mehrere isomere Toluylendiisocyanat(e) (TDI), 2,4'-Diphenylmethandiisocyanat (MDI), ggf. im Gemisch mit 4,4'-Diphenylmethandiisocyanat, verwendet wird/werden.

9. Schmelzklebstoff nach Anspruch 8, **dadurch gekennzeichnet**, daß eine Mischung von Diisocyanaten verwendet wird, die mindestens einen Anteil von 10 Gew.%, bezogen auf die Diisocyanat-Mischung, eines Diisocyanats mit einer sterisch gehinderten Isocyanatgruppe, enthält.

10. Schmelzklebstoff nach mindestens einem der vorhergehenden Ansprüche, **dadurch gekennzeichnet**, daß als Stabilisator Toluol-sulfonyl-isocyanat, Benzoylchlorid, phosphorige Säure oder Phosphorsäure verwendet wird.

11. Verfahren zur Herstellung des Schmelzklebstoffes nach mindestens einem der vorherigen Ansprüche im Ein- oder Mehrstufenverfahren, insbesondere im Ein- oder Zweistufenverfahren.

12. Verwendung eines Schmelzklebstoffes nach mindestens einem der vorherigen Ansprüche zur Verklebung von temperaturempfindlichen und/oder schlecht wärmeleitfähigen Substraten.

## Claims

1. A moisture-curing polyurethane hotmelt adhesive based on polyurethane prepolymers terminated by reactive isocyanate groups prepared from
a) at least one polyether polyol liquid at room temperature with a number average molecular weight in the range from 500 to 10,000 and/or a polyester polyol liquid at room temperature with a number average molecular weight in the range from 500 to 5,000, i.e. its viscosity at 25°C is below 60,000 mPas, as measured with a Brookfield viscosimeter, the glass transition temperature of the polyester polyol being below 20°C,
b) at least one aromatic polyol, i.e. an alkoxylation product of aromatic dihydroxy compounds, with a molecular weight below 1,000,
c) at least one diisocyanate,
d) optionally catalysts, tackifying resins, stabilizers, pigment pastes and other typical auxiliaries,
the stoichiometric ratio of isocyanate groups to the sum of the hydroxyl groups being between 1.03 and 3.5.

2. A hotmelt adhesive as claimed in claim 1, characterized in that polypropylene glycol, optionally with an addition of polypropylene triols, is used as the polyether polyol.

3. A hotmelt adhesive as claimed in claim 2, characterized in that the polyether polyol(s) is/are copolymers of propylene oxide and ethylene oxide, preferably with terminal ethylene oxide units.

4. A hotmelt adhesive as claimed in claim 1, characterized in that the polyester polyol(s) liquid at room temperature is/are substantially difunctional and has/ have a glass transition temperature below 20°C.

5. A hotmelt adhesive as claimed in at least one of claims 1 to 4, characterized in that at least one compound from the group consisting of hydroquinone, resorcinol, pyrocatechol or bis-(hydroxydiphenyl) or bisphenol A, bisphenol F or the isomeric dihydroxynaphthalenes or the isomeric dihydroxyanthracenes or the isomeric dihydroxyanthraquinones is used as the aromatic dihydroxy compound.

6. A hotmelt adhesive as claimed in claim 5, characterized in that the aromatic dihydroxy compounds are propoxylated and in that 1 to 7 propylene oxide units have been added per aromatic hydroxy group.

7. A hotmelt adhesive as claimed in at least one of the preceding claims, characterized in that a compound containing at least one sterically hindered isocyanate group is used as the diisocyanate.

8. A hotmelt adhesive as claimed in claim 7, characterized in that at least one diisocyanate from the group consisting of tetramethyl xylene diisocyanate (TMXDI), 1-isocyanatomethyl-3-isocyanato-1,5,5-trimethyl cyclohexane (IPDI), one or more isomeric tolylene diisocyanate(s) (TDI), 2,4'-diphenyl methane diisocyanate (MDI), optionally in admixture with 4,4'-diphenyl methane diisocyanate, is/are used.

9. A hotmelt adhesive as claimed in claim 8, characterized in that a mixture of diisocyanates containing at least 10% by weight, based on the diisocyanate mixture, of a diisocyanate containing a sterically hindered isocyanate group is used.

10. A hotmelt adhesive as claimed in at least one of the preceding claims, characterized in that toluene sulfonyl isocyanate, benzoyl chloride, phosphorous acid or phosphoric acid is used as stabilizer.

11. The production of the hotmelt adhesive claimed in at least one of the preceding claims by a single-stage or multistage process, more particularly by a single-stage or two-stage process.

12. The use of the hotmelt adhesive claimed in at least one of the preceding claims for the bonding of heat-sensitive substrates and/or substrates of poor thermal conductivity.

## Revendications

1. Colle à fusion qui durcit à l'humidité à base de prépolymères de polyuréthanne avec des groupes terminaux isocyanate réactifs; préparée à partir de :
a) au moins un polyétherpolyol liquide à température ambiante ayant une moyenne numérique des masses molaires dans la zone de 500 à 10.000 et/ou un polyesterpolyol liquide à température ambiante ayant une moyenne numérique des masses molaires dans la zone de 500 à 5000, c'est-à-dire que leur viscosité à 25°C se situe en dessous de 60.000 mPas, mesurée avec un viscosimètre Brookfield, la température de transition vitreuse du polyesterpolyol étant en dessous de 20°C,
b) au moins un polyol aromatique, c'est-à-dire des produits d'alkoxylation de composés aromatiques dihydroxylés ayant une masse molaire en dessous de 1000,
c) au moins un diisocyanate,
d) le cas échéant des catalyseurs, des résines qui rendent collante, des agents stabilisants, des pâtes de couleurs et d'autres adjuvants usuels,
tandis que le rapport stoechiométrique des groupes isocyanate à la somme des groupes hydroxyle se situe entre 1,03 et 3,5.

2. Colle à fusion selon la revendication 1,
caractérisée en ce que
comme polyétherpolyol, on utilise des polypropylèneglycols, éventuellement tout en ajoutant des polypropylènetriols.

3. Colle à fusion selon la revendication 2,
caractérisée en ce que
le ou les polyétherpolyols sont des copolymères a base d'oxyde de propylène et d'oxyde d'éthylène ayant de préférence des unités oxyde d'éthylène terminales.

4. Colle à fusion selon la revendication 1,
caractérisée en ce que
le ou les polyesterpolyol(s) liquide(s) à la température ambiante est/sont essentiellement bifonctionnels et a/ont une température de transition vitreuse de moins de 20°C.

5. Colle à fusion selon au moins une des revendications 1 à 4,
caractérisée en ce que
comme composé aromatique dihydroxylé on choisit au moins un composé dans le groupe de l'hydroquinone, du résorcinol, du pyrocatéchol, ou du bis(hydroxydiphényle) ou bisphénol A, du bisphénol F, ou des dihydroxynaphtalènes isomères ou des dihydroxyanthacènes isomères ou des dihydroxyanthraquinones isomères.

6. Colle à fusion selon la revendication 5,
caractérisée en ce qu'
il s'agit de composés aromatiques dihydroxylés, propoxylés, et en ce qu'on a ajouté par groupe hydroxy aromatique de 1 à 7 unités d'oxyde de propylène.

7. Colle à fusion selon au moins une des revendications précédentes,
caractérisée en ce qu'
on utilise comme diisocyanate un composé ayant au moins un groupe isocyanate empêché stériquement.

8. Colle à fusion selon la revendication 7,
caractérisée en ce qu'
on utilise au moins un diisocyanate choisi dans le groupe du tétraméthylxylènediisocyanate (TMXDI), du 1-isocyanatométhyl-3-isocyanato-1,5,5-triméthylcyclohexane (IPDI), d'un ou plusieurs toluylène diisocyanates isomères (TDI), du 2,4'-diphénylméthane diisocyanate (MDI), éventuellement en mélange avec le 4,4'-diphénylméthane diisocyanate.

9. Colle à fusion selon la revendication 8,
caractérisée en ce qu'
on utilise un mélange de diisocyanate qui renferme au moins une proportion de 10 % en poids, rapporté au mélange de diisocyanates, d'un diisocyanate ayant un groupe isocyanate empêché stériquement.

10. Colle à fusion selon au moins une des revendications précédentes,
caractérisée en ce qu'
on utilise comme agent stabilisant l'isocyanate de toluène sulfonyle, le chlorure de benzoyle, l'acide phosphoreux ou l'acide phosphorique.

11. Procédé de préparation d'une colle à fusion selon au moins une des revendications précédentes, dans un procédé en un seul ou plusieurs stades, en particulier en un procédé à un seul ou à deux stades.

12. Utilisation d'une colle à fusion selon au moins une des revendications précédentes en vue de l'encollage de substrats sensibles à la température et/ou mauvais conducteurs de la chaleur.
